# EUROPÄISCHE PATENTSCHRIFT

(11) **EP 3 981 950 B1**
(45) Veröffentlichungstag und Bekanntmachung des Hinweises auf die Patenterteilung: **13.05.2026**
(21) Anmeldenummer: 20201236.5
(22) Anmeldetag: 12.10.2020
(51) Int. Cl.: E21D 11/00, E04B 9/20, F16B 5/02, F16B 13/00, F16B 25/00

(54) **VERANKERUNGSSYSTEM FÜR EIN BAUELEMENT AN EINEM BAUWERK**
ANCHORING SYSTEM FOR A BUILDING ELEMENT ON A BUILDING
SYSTÈME D'ANCRAGE D'UN COMPOSANT À UNE CONSTRUCTION

(43) Veröffentlichungstag der Anmeldung: 13.04.2022
(73) Patentinhaber: Leviat AG, 3250 Lyss (CH)
(72) Erfinder: Lips, Stefan, 3052 Zollikofen (CH); Oberli, Christoph, 1583 Villarepos (CH)
(74) Vertreter: BOVARD AG

(56) Entgegenhaltungen:
- DE-A1- 102013 109 428
- DE-A1- 19 854 162
- DE-U1- 202018 104 025
- US-A1- 2003 213 199

## Beschreibung

### Technisches Gebiet der Erfindung

Die Erfindung bezieht sich auf ein Verankerungssystem für ein Bauelement an einem Bauwerk, insbesondere (aber nicht ausschliesslich) zum Verankern eines als Zwischendecke ausgebildeten Bauelements an einem Tunnelbauwerk.

### Stand der Technik

Eine Verankerung eines Bauelements an einer Betonkonstruktion unterliegt im Falle der Verankerung einer Zwischendecke im Tunnelbau sehr hohen Sicherheitsanforderungen. Zwischendecken im Tunnelbau sind im Allgemeinen Konstruktionen aus Stahlbeton und werden vor allem vorgesehen, um mittels der Zwischendecke einen Lüftungsraum von einem Fahrraum für den Verkehr zu trennen. Der Lüftungsraum weist grundsätzlich einen ausreichenden Kanalquerschnitt für eine aktive Belüftung und für eine schnelle Absaugung von Abluft und Rauch im Stau- und/oder Brandfall auf. Damit dies gewährleistet ist, beträgt im Allgemeinen der Abstand zwischen einem Innenring bzw. einer Innenschale eines Tunnelbauwerks und der Zwischendecke ca. 1,80 m.

Aufgrund der hohen Sicherheitsanforderungen im Tunnelbau ist es erforderlich, dass die Lagerung und/oder Aufhängung bzw. Abstützung der Zwischendecke für Inspektions- und Wartungszwecke frei zugänglich ist, d.h. insbesondere frei zugänglich über den Hohlraum zwischen der Zwischendecke und dem Innenring. Dies hat darüber hinaus den Vorteil, dass für regelmässig durchzuführende Kontrollen der durch den Tunnel fliessende Verkehr nicht beeinträchtigt wird.

Im Tunnelbau wird generell die Zwischendecke an bewehrten Auflagern gelagert, welche als Streifenkonsole an einer Gewölbeschale bzw. dem Innenring eines Tunnelbauwerks ausgebildet sind, so dass die aus den Auflagerkräften resultierenden Zugkräfte durch die Betonstahlbewehrung aufnehmbar sind. Allerdings ist es in Bereichen mit grosser Spannweite, z.B. in Bereichen von Notfallbuchten und Verzweigungen, und zur temporären Sicherung gestattet, die Zwischendecke mittels Einrichtungen am Tunnelbauwerk aufzuhängen, beispielsweise an dessen Innenring.

Die einsetzbaren Verankerungssysteme müssen hohe Sicherheitsanforderungen erfüllen. Diese beziehen sich unter anderem auf ein geeignetes Material einer solchen Verankerung, für welches gefordert ist, dass es ausreichend widerstandsfähig ist gegenüber der im Tunnel herrschenden aggressiven und korrosionsfördernden Atmosphäre, den extremen Temperaturschwankungen z.B. im Brandfall, und gegen die auftretenden statischen und dynamischen Lasten. Ferner gibt es Vorschriften für die Konstruktion an sich, d.h. der Einsatz von Klebankern oder Ankervorrichtungen mit Schweissnaht zur Aufhängung der Zwischendecke sind nicht zulässig. Vorgeschrieben ist ebenfalls, dass für die Montage von dynamisch belasteten Verankerungen schlupffreie, hinterschneidende und ermüdungsfeste Befestigungsmittel mit vollem Betonverbund eingesetzt werden sollten, so dass empfohlen wird, in Zugzonen für schwere Lasten, wie bei Zwischendecken, Hinterschnittanker bzw. Formschlussanker und einbetonierte Anker zu verwenden.

Bekannt ist der sogenannte Schweizer Riegel, beispielsweise aus EP 0 062 155 und CH 701 852, zur Verankerung schwerer Lasten in Fels, Gestein oder einer Betonkonstruktion. Der Schweizer Riegel umfasst eine Ankerstange mit einem Aussengewinde, welche sich an einem Ende mittels einer Ankerplatte an dem zu verankernden Bauteil abstützt. Das entgegengesetzte Ende der Ankerstange steht in Wirkverbindung mit einem Innengewinde eines Halteelements, welches in Fels, Gestein oder einer Betonkonstruktion aufgenommen ist. Zur Verankerung werden eine erste Bohrung, die Verankerungsbohrung, und eine zweite Bohrung, die Hilfsbohrung, in dem Fels, Gestein oder Betonkonstruktion in einem spitzen Winkel zueinander verlaufend gefertigt. In der Hilfsbohrung wird das Halteelement aufgenommen, welches von der in der Verankerungsbohrung aufgenommenen Ankerstange durchsetzt wird. So kann die in der Verankerungsbohrung aufgenommene Ankerstange mittels des in der Hilfsbohrung eingesetzten Halteelements entgegen einer Zugbeanspruchung gehalten werden. Die Ankerstange kann in dem Halteelement darüber hinaus durch ein Sicherungselement gegen Lockern, bedingt durch auftretende Vibrationen, gesichert werden. Herkömmlicherweise bildet das Sicherungselement mit der Ankerstange einen Formschluss. Da zur Platzierung des Schweizer Riegels eine Vielzahl von Bohrungen Millimeter genau gefertigt werden müssen, ist die Anordnung von Schweizer Riegeln zum Abstützen einer Zwischendecke in einem Tunnelbauwerk sehr arbeitsaufwendig sowie zeit- und kostenintensiv.

Ferner ist aus DE 3 631 544 ein Verfahren zur Verankerung eines Bauteils in Beton bekannt, wobei zunächst ein erstes Bohrloch zur Aufnahme eines Haltedübels gesetzt wird. Anschliessend wird ein zweites Bohrloch zur Aufnahme eines Sicherungselements gefertigt. Ausgehend von einem ersten Ende des ersten Bohrlochs, dem Bohrlochmund, überschneidet sich das zweite Bohrloch teilweise und erstreckt sich divergent zu dem ersten Bohrloch. In das zweite Bohrloch wird ein Sicherungselement eingebracht, welches mit dem Haltedübel einen Formschluss bildet. Beispielsweise kann das Sicherungselement in einer Patrone bevorratete reaktive Verbundkomponenten umfassen, die durch das Eindrehen des Haltedübels freigesetzt werden und ihre verankernde Wirkung entfaltet.

Aus DE 10 2013 109428 A1 ist ein Verankerungssystem bekannt mit einer aus einem Federdraht gewickelten Schraubenfeder, welche in eine Hülse einschraubbar und an deren montageseitigem Ende eine Mutter zum Verspannen eines Anbauteils aufschraubbar ist.

Aus DE 198 54 162 A1 ist eine schallreduzierte Aufhängung einer Zwischendecke im Wohnungsbau bekannt, umfassend eine zweiteilige Hülse und eine Distanzschraube.

Aus DE 20 2018 104025 U1 ist zur Verankerung eines Betonfertigteils ein Schaft mit einem Aussengewinde und einem verbreiterten Kopf bekannt, an welchem ein Verbindungselement anordenbar ist.

Alle diese Verankerungssysteme sind entweder durch die millimetergenaue Fertigung von Bohrungen oder der Anzahl der umfassten Elemente aufwendig und kostenintensiv.

### Zusammenfassung der Erfindung

Eine Aufgabe der vorliegenden Erfindung besteht darin, ein Verankerungssystem für ein Bauelement an einem Bauwerk vorzusehen, insbesondere zum Verankern einer Zwischendecke an einem Tunnelbauwerk bzw. einer Tunneldecke, welches optimal und in einfacher Weise aber unter Berücksichtigung der hohen Sicherheitsanforderungen eine Verankerung des Bauelements ermöglicht. Das Verankerungssystem soll insbesondere mit einer gegenüber dem Stand der Technik reduzierten Anzahl von erforderlichen Bohrungen und Elementen sowie ohne Schweissungen anordenbar sein. Das Verankerungssystem soll dabei kontrollierbar und eventuell austauschbar sowie nachrüstbar sein.

Erfindungsgemäss wird die Aufgabe mit einem Verankerungssystem zum Verankern eines als Zwischendecke ausgebildeten Bauelements an einem Bauwerk im Tunnelbau gelöst, umfassend ein erstes Verankerungsmittel, welches ein als Hülse ausgebildetes in eine Bohrung des Bauwerks einschraubbares Halteelement mit einem Aussengewinde umfasst, das , ein an dem Bauelement anordenbares zweites Verankerungsmittel, , und eine Spanneinheit. Die Spanneinheit des erfindungsgemässen Verankerungssystem umfasst eine erste Zugstange, welche mit einem ersten Endabschnitt in die in der Bohrung einschraubbare Hülse einsetzbar und eine zweite Zugstange, welche an dem zweiten Verankerungsmittel einsetzbar ist und eine Spannvorrichtung, um die erste Zugstange und die zweite Zugstange miteinander zu verbinden.

In einer Ausführungsform weist das als Hülse ausgebildete Halteelement des ersten Verankerungsmittels ein Aussengewinde über seine vollständige Länge auf, über welches es in der gefertigten Bohrung am Tunnelbauwerk vollständig einschraubbar ist. Durch die Gestaltung und den Einsatz der Hülse, die sich über die gesamte Länge der in dem Bauwerk gefertigten Bohrung erstreckt und mittels des über die vollständige Länge der Hülse ausgebildeten Aussengewindes, wird ein satter Sitz dieser Hülse im Bauwerk, z.B. einer Betonkonstruktion, erreicht.

Für eine Platzierung dieses hülsenartigen Halteelements sind unterschiedliche Methoden und/oder Installationshilfen vorgesehen. So ist in einer Ausführungsform das Aussengewinde des hülsenartigen Halteelements ein selbstschneidendes Gewinde. Dadurch kann das hülsenartige Haltelement mit dem selbstschneidenden Aussengewinde direkt in die vorher in dem Bauwerk gefertigte Bohrung eingeschraubt werden, wodurch das Platzieren des Haltelements besonders einfach gestaltet ist. Alternativ kann mittels eines Gewindeschneidelements in der vorher gefertigten Bohrung in dem Bauwerk der Tunnelkonstruktion ein Gewinde gefertigt werden, welches kompatibel zu dem Aussengewinde des hülsenartigen Halteelements ist. Demnach kann eine an dem Halteelement integrierte oder eine separate Furchspitze mit einem Aussengewindeabschnitt an einem frontalen bzw. verlaufenden Aussengewindeabschnitt eingesetzt werden, um das Gewinde in der Bohrung zu fertigen.

An dem hülsenartigen Halteelement ist in einer Ausführungsform im einschraubseitigen Endbereich innenseitig ein Innengewinde ausgebildet, in welches zum Platzieren des hülsenartigen Halteelements eine Installationshilfe und/oder zum Verankern des Bauelements die Zugstange einschraubbar ist.

Alternativ kann ein Einschrauben der Hülse in die gefertigte Bohrung erleichtert werden, wobei an einem dem einschraubseitigen Endbereich gegenüberliegenden eingangsseitigen Endbereich der Hülse eine Aufnahme für eine Installationshilfe ausgestaltet ist. Die Installationshilfe kann als ein Werkzeug ausgebildet sein, welches in der Aufnahme zum Installieren der Hülse anordenbar ist.

Die Installationshilfe kann als Schraube mit einem Schraubenkopf ausgebildet sein, welche mit dem Innengewinde innenseitig der Hülse in Eingriff gebracht werden kann. So kann am eingangsseitigen Endbereich der Hülse innenseitig ein Innengewinde ausgebildet sein, in welches eine als Schraube ausgebildete Installationshilfe einsetzbar, insbesondere mittels eines kompatibel ausgebildeten Gewindes einschraubbar, ist. Dabei kann dieses Innengewinde im eingangsseitigen Endbereich der Hülse einen grösseren Innendurchmesser aufweisen als das Innengewinde am einschraubseitigen Endbereich der Hülse.

Die als Schraube ausgebildete Installationshilfe einer Ausführungsform weist einen Schraubenkopf auf, welcher von dem hülsenartigen Halteelement vorsteht und mit einem entsprechenden Werkzeug wechselwirken kann, um ein Drehmoment auf das hülsenartige Halteelement zum Einschrauben desselben in die gefertigte Bohrung im Tunnelbauwerk zu übertragen. Beispielsweise kann dies durch ein Innenprofil oder einen Schlitz oder einen geformten Umfang am Schraubenkopf bereitgestellt sein. Andere Innenkonturen am eingangsseitigen Endbereich des hülsenartigen Halteelements zur form- und/oder kraftschlüssigen Aufnahme der Installationshilfe sind denkbar.

Vorteilhafterweise verbleibt die Installationshilfe so lange in dem hülsenförmigen Halteelement, bis darin zur Verankerung des Bauelements die erste Zugstange eingesetzt wird. Die Installationshilfe verschliesst das Innere des hülsenförmigen Halteelements, wodurch dieses geschützt wird, so dass auch eine Platzierung der hülsenartigen Halteelemente zu einem frühen Zeitpunkt und unbeeinträchtigt von nachfolgenden Arbeiten während des Tunnelbaus erfolgen kann.

In einer Ausführungsform des Verankerungssystems ist ein Trennelement umfasst, welches zwischen der in dem hülsenartigen Halteelement eingesetzten Installationshilfe und einem benachbarten Endbereich desselben ein Trennelement anordenbar ist und welches ein Kaltverschweissen der umfassten Elemente verhindert. So wird gewährleistet, dass die Installationshilfe jederzeit leicht aus dem hülsenartigen Halteelement entfernbar ist.

In die in die gefertigte Bohrung des Bauwerks eingesetzte Hülse ist die erste Zugstange der Spanneinheit einsetzbar, wobei diese beispielsweise als eine Gewindestange ausgebildet sein kann oder zumindest in einem Endabschnitt ein Aussengewinde aufweist, welches mit dem Innengewinde im einschraubseitigen Endbereich der Hülse kompatibel ist. Die erste Zugstange ist demnach in optimaler Weise mit dem das hülsenartige Halteelement umfassenden ersten Verankerungsmittel verbindbar und auch einfach austauschbar.

Durch das sich über die vollständige Länge des hülsenartigen Halteelements erstreckende Aussengewinde, womit dieses vollständig in die gefertigte Bohrung eingeschraubt werden kann, wird nicht nur ein fester Sitz des hülsenartigen Haltelements im Tunnelbauwerk erreicht, sondern auch die von der im einschraubseitigen Endbereich aufgenommenen erste Zugstange ausgehende Kraft über das Aussengewinde in optimaler Weise in die die Bohrung bzw. das hülsenartige Halteelement umgebende Konstruktion eingeleitet. Aufgrund der Länge des vorgesehenen Aussengewindes sowie der Aufnahme der ersten Zugstange der Spanneinheit mittels der Schraubverbindung im einschraubseitigen Endbereich des Halteelements werden örtliche Spannungsspitzen weitgehend vermieden.

Die Spanneinheit umfasst die erste Zugstange, welche geeignet ist, in dem hülsenartigen Halteelement und damit im Bauwerk eingesetzt und im einschraubseitigen Endbereich dieser Hülse gehalten zu werden.

Zur Verankerung eines als Zwischendecke ausgebildeten Bauelements an einer Tunneldeckenkonstruktion bzw. einem Tunnelbauwerk kann in einer Ausführungsform die zweite Zugstange mit dem zweiten Verankerungsmittel in Verbindung gebracht werden, welches an dem zu verankernden Bauelement vorgesehen ist. Vorzugsweise umfasst in einer Ausführungsform das zweite Verankerungsmittel eine Ankerplatte, welche das Bauelement abstützt, d.h. insbesondere an der Unterseite des Bauelements anordenbar ist. Vorgesehen sein kann, dass an dem zu verankernden Bauelement eine zu der Bohrung im Bauwerk fluchtende zweite Bohrung im Bauelement gefertigt ist, ausgebildet als Durchgangsbohrung. Die zweite Zugstange kann sich durch die Durchgangsbohrung erstrecken, wobei die Ankerplatte gegen das Bauelement mittels einer auf die zweite Zugstange aufschraubbaren Spannmutter spannbar ist.

Das zweite Verankerungsmittel, welches an dem zu verankernden Bauelement, d.h. der Zwischendecke, anordenbar ist, kann in einer Ausführungsform ebenfalls ein hülsenförmiges Halteelement umfassen, welches mittels eines über dessen vollständige Länge ausgebildeten Aussengewindes in eine am Bauelement gefertigte zweite Bohrung einsetzbar und in einem entsprechenden einschraubseitigen Endbereich darin gehalten ist. Insbesondere sind die Bohrung im Bauwerk, z.B. einer Betonkonstruktion der Tunneldecke, und die zweite Bohrung im mit dem Bauwerk zu verankernden Bauelement zueinander fluchtend angeordnet. Das im Bauelement einsetzbare hülsenartige Haltelement ist ebenfalls ausgebildet, um insbesondere im einschraubseitigen Endbereich die zweite Zugstange aufzunehmen, welche sich von dem Bauelement in Richtung Bauwerk erstreckt. Diese Ausführungsform des Verankerungssystem ist besonders vorteilhaft, da nur wenige unterschiedliche Elemente erforderlich sind, so dass auf einer Baustelle unproblematisch auch eine grosse Anzahl von Verankerungssystemen installiert werden können.

Erfindungsgemäss umfasst die Spanneinheit die zweite Zugstange, welche in dem zu verankernden Bauelement, beispielsweise einem Betonfertigbauteil der Zwischendecke, in dem darin angeordneten zweiten Verankerungsmittel einsetzbar ist. Die erste Zugstange und die zweite Zugstange sind über eine geeignete Spannvorrichtung, insbesondere ein Spannschloss, miteinander verbindbar. Ein bekanntes Spannschloss ist für eine einstellbare axiale Verbindung von zwei koaxialen Stangen ausgebildet. Es umfasst im Allgemeinen eine rohrförmige Buchse, wobei an einem Ende ein Linksgewinde und an einem anderen Ende ein Rechtsgewinde ausgebildet sind, in denen jeweils entsprechend kompatible Aussengewinde der Zugstangen aufnehmbar sind. Bei Drehung der Buchse wird in Abhängigkeit der Drehrichtung ein axialer Abstand zwischen den Stangen verkleinert oder vergrössert bzw. eingestellt. Ferner können Mittel am Spannschloss vorgesehen sein, um die eingenommene Verspannung der beiden Zugstangen relativ zueinander zu sichern.

Eine Alternative und nicht durch die Erfindung umfasst stellt eine Zugstange mit einem sich über einen ersten Abschnitt ersteckenden Linksgewinde und einem sich über einen zweiten Abschnitt erstreckenden Rechtsgewinde dar, wobei dazwischenliegend eine Spannschraube angeordnet ist. Auch hier kann eine axiale Verspannung der mit ihren Endbereichen jeweils in dem ersten Verankerungsmittel und in dem zweiten Verankerungsmittel aufgenommene Zugstange durch Drehung der Spannschraube in einer Drehrichtung erreicht werden.

Mit einem erfindungsgemässen Verankerungssystem kann die Verankerung einer Zwischendecke an einem Tunnelbauwerk vereinfacht werden, wobei eine Wartung und Instandhaltung sowie eine Demontage der Verbindung bzw. Verankerung einfach und zeitsparend möglich ist. Mittels des erfindungsgemässen Verankerungssystems können schnell, rationell und sicher Bauelemente, insbesondere Betonfertigbauteile, miteinander verbunden werden. Eine derartige Verbindung ist sofort nach der Spannung des Verankerungssystems belastbar, wobei es auch vorteilhaft ist, dass dieses mit hoher Präzision serienmässig herstellbar ist. Durch eine geeignete Werkstoffwahl der Elemente des Verankerungssystems können eine hohe Festigkeit, Zähigkeit und Schwingungsbeständigkeit erreicht werden, wobei auch die Korrosionsfestigkeit zu beachten ist.

### Kurzbeschreibung der Zeichnung

Ausführungsformen der Erfindung werden nachfolgend an Hand der beiliegenden Zeichnung beispielhaft näher erläutert.

Es zeigt:
Fig. 1 eine Schnittdarstellung eines Verankerungssystems in einer ersten Ausführungsform;
Fig. 2 eine Schnittdarstellung eines Verankerungssystems in einer zweiten Ausführungsform;
Fig. 3 eine Schnittdarstellung eines hülsenartigen Halteelements des Verankerungssystems;
Fig. 4 eine Schnittdarstellung des hülsenartigen Halteelements mit einer Installationshilfe; und
Fig. 5 eine Schnittdarstellung des hülsenartigen Halteelements mit einer Installationshilfe.

### Detaillierte Beschreibung der Zeichnung

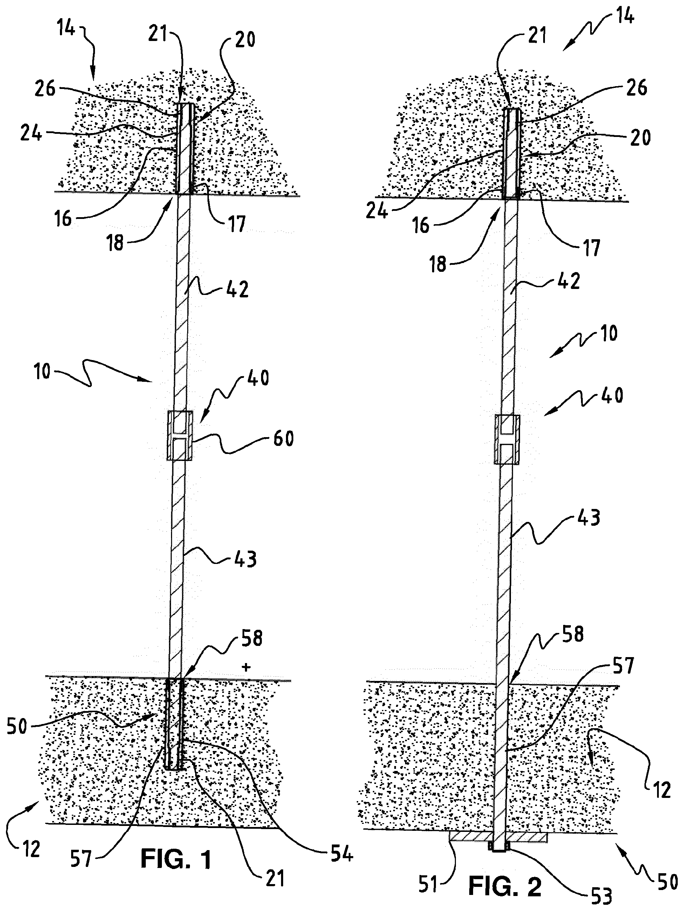

Aus Figur 1 ist ein Verankerungssystem 10 ersichtlich, welches ein Bauelement 12 mit einem zweiten Bauelement, bezeichnet als Bauwerk 14, verbindet. Insbesondere handelt es sich bei dem zu verankernden Bauelement 12 um ein Betonfertigteil, insbesondere um ein Element einer Zwischendecke, welche im Tunnelbau unterhalb des Tunnelbauwerks 14 eingezogen wird.

In der dargestellten Ausführungsform des Verankerungssystems 10 umfasst dieses ein erstes Verankerungsmittel 20 mit einem ersten Halteelement 16, das als Hülse 17 ausgebildet und in einer Bohrung 18 in dem Bauwerk 14 aufgenommen ist. Aussenseitig an der Hülse 17 ist ein über die gesamte Länge sich erstreckendes Gewinde 24 ausgebildet. Wie aus der Fig. 1 ersichtlich, wird die Hülse 17 in der im Bauwerk 14 gefertigten Bohrung 18 aufgenommen, bzw. eingeschraubt. Dabei kann das Gewinde 24 der Hülse 17 als ein selbstschneidendes Gewinde 24 ausgebildet sein. Hier dringt das selbstschneidende Gewinde 24 in den Beton, das Gestein oder den Fels des Bauwerks 14 ein, wodurch die Hülse 17 direkt in eine in dem Bauwerk 14 angebrachte Bohrung 18 eingeschraubt werden kann. Es können aber auch Hülsen 17 eingesetzt werden, deren Aussengewinde 24 nicht selbstschneidend ausgebildet sind.

Um die Hülse 17 in die vorgefertigte bzw. gefertigte Bohrung 18 einzubringen, kann in die Bohrung 18 mittels eines Gewindeschneidelements ein entsprechendes Gewinde geschnitten werden, wobei das Gewindeschneidelement folgend wieder aus der Bohrung herausgedreht werden kann. Anschliessend kann die Hülse 17 mit dem Aussengewinde 24 in die vorbereitete Bohrung 18 eingeschraubt werden. Hier werden die Hülse 17 und das Aussengewinde 24 nicht so stark beansprucht und trotzdem wird ein sicherer Sitz der Hülse 17 erreicht.

Die in die Bohrung 18 eingeschraubte Hülse 17 erstreckt sich praktisch über die gesamte Länge dieser Bohrung, so dass die Kraft über einen grossen Bereich von der Hülse 17 und dem Aussengewinde 24 optimal in seine Umgebung, insbesondere in den umgebenden Beton, eingeleitet wird.

Aus der Ausführungsform gemäss Figur 1 ist ersichtlich, dass in dem zu verankernden Bauelement 12 ein zweites Verankerungsmittel 50 vorgesehen ist, ebenfalls eine Hülse 57 mit einem Aussengewinde 54 umfassend, welche in einer gefertigten zweiten Bohrung 58 im Bauelement 12 einsetzbar ist. Hülse 57, Aussengewinde 54 und zweite Bohrung 58 können weitgehend identisch zu denjenigen ausgebildet sein, welche in dem Bauwerk 14 angeordnet sind, können aber auch eine andere Ausführungsform aufweisen. Allerdings sind die (erste) Bohrung 18 im Bauwerk 14 und die (zweite) Bohrung 58 im Bauelement 12 weitgehend fluchtend zueinander ausgerichtet.

In die Hülse 17 ist eine Spanneinheit 40 eingesetzt, ausgebildet als Zugstange 42. Hierfür ist die Hülse 17 im einschraubseitigen Endbereich 21 innenseitig mit einem Innengewinde 26 versehen. Die Spanneinheit 40, bzw. die Zugstange 42, ist somit in das Innengewinde 26 in der Hülse 17 einschraubbar. Dabei kann die Zugstange 42 eine Gewindestange sein, die auf eine entsprechende Länge abgelängt ist. Vorteilhaft weist das Innengewinde 26 eine Länge auf, welche in etwa dem 1,5-fachen Nenndurchmesser der Zugstange 42 entspricht.

Wie in Figur 1 dargestellt, erstreckt sich die erste Zugstange 42 über die Hülse 17 hinaus, wobei in einer Ausführungsform zumindest in einem vorstehenden Endbereich ein Gewinde vorgesehen ist, welches mit dem zweiten Verankerungsmittel 50 direkt verbindbar ist, welches das Bauelement 12 stützend hält. In der dargestellten Ausführungsform umfasst die Spanneinheit 40 eine zweite Zugstange 43, welche über ein Spannschloss 60 mit der (ersten) Zugstange 42 spannbar verbindbar ist. Die zweite Zugstange 43 ist mit dem zweiten Verankerungsmittel 50 verbindbar. In der dargestellten Ausführungsform der Figur 1 umfasst demnach das zweite Verankerungsmittel 50 die in der im Bauelement 12 gefertigten zweiten Bohrung 58 aufgenommene Hülse 57, welche vergleichbar der im Bauwerk 14 aufgenommenen Hülse 17 ausgebildet sein kann. Die zweite Zugstange 43 ist zumindest im einschraubseitigen Endbereich 21 der Hülse 57 gehalten. Das Spannschloss 60 weist an einer rohrförmigen Buchse ein Linksgewinde und ein gegenüberliegendes Rechtsgewinde auf, wobei in eines die erste Zugstange 42 und in das andere die zweite Zugstange 43 mit ihren mit kompatiblen Gewinden ausgebildeten Endbereichen einschraubbar sind.

Demnach ist das Verankerungssystem 10 derart ausgebildet, dass mit wenigen Elementen, d.h. Hülsen 17, 57, Zugstangen 42, 43 und der Spannvorrichtung 60 eine sichere Verankerung des als Zwischendecke ausgebildeten Bauelements 12 an dem Bauwerk 14, z.B. einem Innenring eines Tunnels, gewährleistet ist, wobei auf einfache Weise eine Verspannung erzielt ist.

In Figur 2 ist eine alternative Ausführungsform des Verankerungssystems 10 dargestellt, wobei der Unterschied zu der vorgängig beschriebenen Ausführungsform der Figur 1 lediglich darin besteht, dass das zweite Verankerungsmittel 50 variiert. Das zweite Verankerungsmittel 50 umfasst eine Ankerplatte 51, welche an einer zu stützenden Fläche des Bauelements 12 anliegt. Die zweite Zugstange 43 durchsetzt die als Durchgangsbohrung 52 ausgebildete zweite Bohrung 58 und die Ankerplatte 51 und ist mittels einer auf die zweite Zugstange 43 aufschraubbaren Spannmutter 53 mit dieser verbindbar, so dass die Ankerplatte 51 gegen das Bauelement 12 gespannt ist.

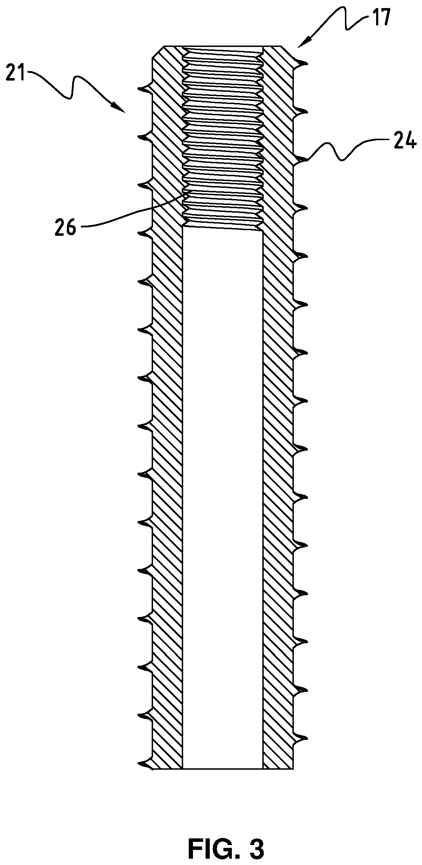

Figur 3 zeigt eine Schnittdarstellung einer Ausführungsform der Hülse 17 welche in dem Bauwerk 14 anordenbar ist. Vergleichbares gilt für die Hülse 57, aufnehmbar in dem mit dem Bauwerk 14 zu verankernden Bauelement 12. Aussenseitig an der Hülse 17 ist das über die gesamte Länge sich erstreckende Aussengewinde 24 angebracht. In einem einschraubseitigen Endbereich 21 der Hülse 17 ist innenseitig das Innengewinde 26 ausgebildet, in welches die Zugstange 42 mit seinem entsprechenden Gewinde einschraubbar ist.

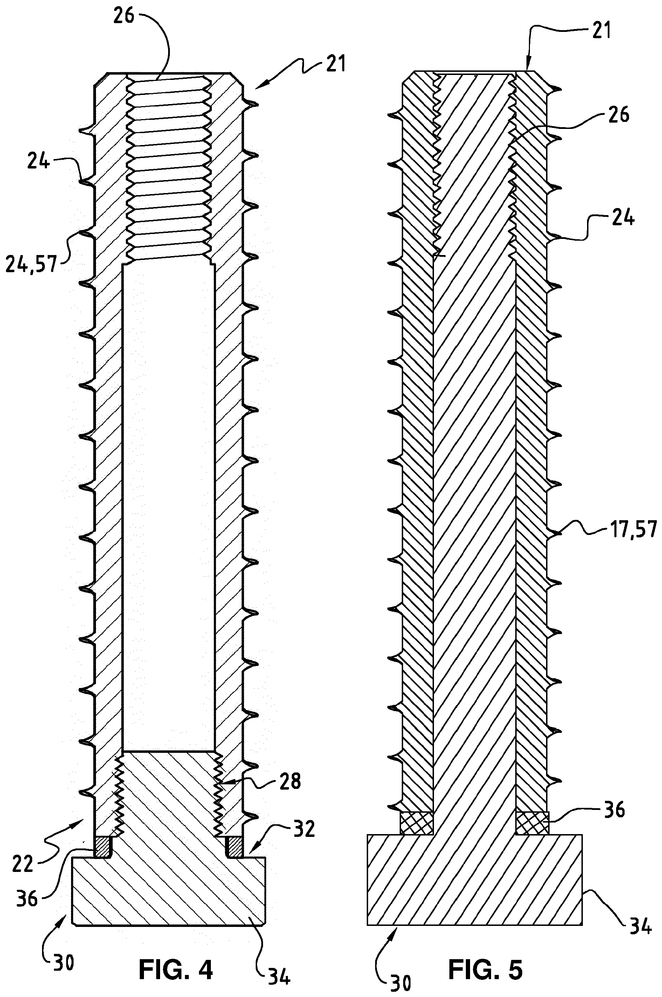

Figur 4 zeigt eine Variante der Hülse 17, welche sich von der vorgängig beschriebenen Hülse 17 lediglich dadurch unterscheidet, dass der Innenbereich der Hülse 17 variierend gestaltet ist. Neben dem an dem einschraubseitigen Endbereich 21 ausgebildeten Innengewinde 26 ist an einem gegenüberliegenden eingangsseitigen Endbereich 22 der Hülse 17 eine als Gewindebereich gestaltete Aufnahme 28 ausgebildet, in welche eine Installationshilfe 30 einsetzbar ist. Wie beispielhaft dargestellt, weist der Gewindebereich im eingangsseitigen Endbereich 22 der Hülse 17 einen grösseren Innendurchmesser als das Innengewinde 26 im einschraubseitigen Endbereich 21 auf. Somit kann die Zugstange 42 durch den eingangsseitigen Endbereich 22 eingeführt und in das Innengewinde 26 am einschraubseitigen Endbereich 21 eingeschraubt werden.

Ferner ist erkennbar, dass in das Innengewinde im eingangsseitigen Endbereich 22 der Hülse eine als Schraube 32 mit einem Schraubenkopf 34 ausgebildete Installationshilfe 30 aufnehmbar ist. Der vorstehende Schraubenkopf 34 ist derart ausgebildet, dass er mit einem entsprechenden Werkzeug in Eingriff gebracht werden kann und damit die Hülse 17 in das Bauwerk 14 eingeschraubt werden kann, wobei sie als zweites Verankerungsmittel 50 genutzt wird. Insbesondere kann mittels des Schraubenkopfs 34, die Hülse 17 in die im Bauwerk 14 bzw. im Bauelement 12 gefertigte Bohrungen 18, 58 eingeschraubt werden. Gleichzeitig verschliesst die eingesetzte Installationshilfe 30 das Innere der Hülse 17, so dass dieses vor Verschmutzung etc. geschützt ist. Demnach können Hülsen 17 bzw. 57 bereits zu einer frühen Phase angeordnet werden und bei Bedarf für die Verankerung mittels des Verankerungssystems 10 aktiviert werden, in dem die Installationshilfe 30 entfernt wird.

Als vorteilhaft erweist sich dabei, dass zwischen der aufgenommenen Installationshilfe 30 und einer benachbarten Endfläche der Hülse 17 ein Trennelement 36 vorgesehen ist, ausgebildet als eine ringförmige Trennscheibe. Insbesondere kann damit verhindert werden, dass die hohen Kräfte beim Setzen der Hülse 17 mittels der als Schraube ausgebildeten Installationshilfe 30 ein Kaltverschweissen zwischen Hülse 17 und Installationshilfe 30 erfolgt.

In Figur 5 ist eine alternative Ausführungsform der Installationshilfe 30 dargestellt. Hier umfasst die Hülse 17 bzw. die im Bauelement 12 anordenbare Hülse 57 am einschraubseitigen Endbereich 21 das innenseitig ausgebildete Innengewinde 26, wobei dieses in Eingriff mit einer entsprechend ausgebildeten Installationshilfe 30 bringbar ist. Dabei erstreckt sich die Installationshilfe 30 vom eingangsseitigen Endbereich 22 der Hülse 17 bis zum einschraubseitigen Endbereich 21 und ist dort einschraubbar, um einerseits die Hülse 17; 57 in die entsprechend gefertigte Bohrung 18; 58 einzusetzen und andererseits als Schutz so lange in der Hülse 17; 57 zu verbleiben, bis diese zur Verankerung genutzt wird.

### Bezugszeichenliste

- 10: Verankerungssystem
- 12: verankerbares Bauelement
- 14: Bauwerk
- 16: Halteelement
- 17: Hülse im Bauwerk
- 18: Bohrung im Bauwerk

- 20: erstes Verankerungsmittel
- 21: einschraubseitiger Endbereich der Hülse
- 22: eingangsseitiger Endbereich der Hülse
- 24: Aussengewinde der Hülse
- 26: Innengewinde der Hülse
- 28: Aufnahme für Installationshilfe

- 30: Installationshilfe
- 32: Schraube
- 34: Schraubenkopf
- 36: Trennelement

- 40: Spanneinheit
- 42: Zugstange
- 43: zweite Zugstange
- 44: erster Endabschnitt der Zugstange
- 46: zweiter Endabschnitt der Zugstange
- 48: Gewinde der Zugstange

- 50: zweites Verankerungsmittel
- 51: Ankerplatte
- 52: Durchgangsbohrung
- 53: Spannmutter
- 54: Aussengewinde
- 57: Hülse im Bauelement
- 58: zweite Bohrung

- 60: Spannschloss

## Patentansprüche

1. Verankerungssystem (10) zum Verankern eines als Zwischendecke ausgebildeten Bauelements (12) an einem Bauwerk (14) im Tunnelbau, umfassend
▪ ein erstes Verankerungsmittel (20), welches ein als Hülse (17) ausgebildetes in eine Bohrung (18) des Bauwerks (14) einschraubbares Halteelement (16) mit einem Aussengewinde (24) umfasst,
▪ ein an dem Bauelement (12) anordenbares zweites Verankerungsmittel (50) und
▪ eine Spanneinheit (40),
**dadurch gekennzeichnet, dass**
die Spanneinheit (40) eine erste Zugstange (42) umfasst, welche mit einem ersten Endabschnitt (44) in die in der Bohrung (18) einschraubbaren Hülse (17) einsetzbar und in einem einschraubseitigen Endbereich (21) der Hülse (17) gehalten ist, und eine zweite Zugstange (43), welche in dem zweiten Verankerungsmittel (50) einsetzbar ist und eine Spannvorrichtung (60), um die erste Zugstange (42) und die zweite Zugstange (43) miteinander zu verbinden.

2. Verankerungssystem (10) nach Anspruch 1, **dadurch gekennzeichnet, dass** sich das Aussengewinde (24) des als Hülse (17) ausgebildeten Halteelements (16) über die vollständige Länge der Hülse (17) erstreckt, und dass das Haltelement (16) vollständig in die erste Bohrung (18) einschraubbar ist.

3. Verankerungssystem (10) nach Anspruch 1 oder 2, **dadurch gekennzeichnet, dass** das Aussengewinde (24) der Hülse (17) ein selbstschneidendes Gewinde ist.

4. Verankerungssystem (10) nach einem der vorhergehenden Ansprüche, **dadurch gekennzeichnet, dass** im einschraubseitigen Endbereich (21) der Hülse (17) innenseitig ein Innengewinde (26) ausgebildet ist, in welches die erste Zugstange (42) mit einem am ersten Endabschnitt (44) ausgebildeten kompatiblen Gewinde (48) und/oder eine Installationshilfe (30) einschraubbar ist.

5. Verankerungssystem (10) nach einem der Ansprüche 1 bis 3, **dadurch gekennzeichnet, dass** ein dem einschraubseitigen Endbereich (21) gegenüberliegender eingangsseitiger Endbereich (22) der Hülse (17) mit einer Aufnahme (28) für eine Installationshilfe (30) zum Einschrauben der Hülse (17) in die gefertigte Bohrung (18) ausgestaltet ist.

6. Verankerungssystem (10) nach Anspruch 5, **dadurch gekennzeichnet, dass** die Aufnahme (28) am eingangsseitigen Endbereich (22) der Hülse (17) einen grösseren Innendurchmesser als am einschraubseitigen Endbereich (21) der Hülse (17) aufweist.

7. Verankerungssystem (10) nach einem der Ansprüche 4 bis 6, **dadurch gekennzeichnet, dass** ein Trennelement (36) umfasst ist, welches zwischen der in der Hülse (17) aufgenommenen Installationshilfe (30) und einem benachbarten Endbereich der Hülse (17) angeordnet ist.

8. Verankerungssystem (10) nach einem der vorhergehenden Ansprüche, **dadurch gekennzeichnet, dass** das zweite Verankerungsmittel (50) eine Ankerplatte (51) umfasst, welche zum Abstützen des Bauelements (12) mit der zweiten Zugstange (43) verbunden ist.

9. Verankerungssystem (10) nach Anspruch 8, **dadurch gekennzeichnet, dass** die Ankerplatte (51) mit der zweiten Zugstange (43) der Spanneinheit (40) mittels einer Spannmutter (53) verbindbar ist.

10. Verankerungssystem (10) nach einem der Ansprüche 1 bis 7, **dadurch gekennzeichnet, dass** das zweite Verankerungsmittel (50) eine in eine in dem Bauelement (12) gefertigte zweite Bohrung (58) vollständig mit einem über die vollständige Länge ausgebildeten Aussengewinde (54) einschraubbare Hülse (57) umfasst.

11. Verankerungssystem (10) nach einem der vorhergehenden Ansprüche, **dadurch gekennzeichnet, dass** die Spannvorrichtung (60) als ein Spannschloss ausgebildet ist.

## Claims

1. Anchoring system (10) for anchoring a structural element (12) designed as an intermediate ceiling to a structure (14) in tunnel construction, comprising
▪ a first anchoring means (20), which comprises a retaining element (16) designed as a sleeve (17) that is screwable into a borehole (18) in the structure (14), the retaining element having an external thread (24),
▪ a second anchoring means (50) that is able to be arranged on the structural element (12), and
▪ a clamping unit (40),
**characterized in that**
the clamping unit (40) comprises a first tie rod (42) which is able to be inserted with a first end section (44) into the sleeve (17) that is screwable into the borehole (18) and is held in an end region (21) of the sleeve (17) on the screw-in side, and a second tie rod (43) which is able to be inserted into the second anchoring means (50) and a tensioning device (60) for connecting the first tie rod (42) and the second tie rod (43) to each other.

2. Anchoring system (10) according to claim 1, **characterized in that** the external thread (24) of the retaining element (16) designed as a sleeve (17) extends over the entire length of the sleeve (17), and that the retaining element (16) is able to be screwed completely into the first borehole (18).

3. Anchoring system (10) according to claim 1 or 2, **characterized in that** the external thread (24) of the sleeve (17) is a self-tapping thread.

4. Anchoring system (10) according to one of the preceding claims, **characterized in that** an internal thread (26) is formed on the inside of the screw-in end region (21) of the sleeve (17), into which internal thread the first tie rod (42) with a compatible thread (48) formed on the first end section (44) and/or an installation aid (30) is able to be screwed.

5. Anchoring system (10) according to one of the claims 1 to 3, **characterized in that** an inlet-side end region (22) of the sleeve (17) opposite the screw-in end region (21) is designed with an accommodation (28) for an installation aid (30) for screwing the sleeve (17) into the made borehole (18).

6. Anchoring system (10) according to claim 5, **characterized in that** the accommodation (28) at the inlet end region (22) of the sleeve (17) has a larger internal diameter than at the screw-in end region (21) of the sleeve (17).

7. Anchoring system (10) according to one of the claims 4 to 6, **characterized in that** a separating element (36) is included, which is arranged between the installation aid (30) accommodated in the sleeve (17) and an adjacent end region of the sleeve (17).

8. Anchoring system (10) according to one of the preceding claims, **characterized in that** the second anchoring means (50) comprises an anchor plate (51) which is connected to the second tie rod (43) to support the structural element (12).

9. Anchoring system (10) according to claim 8, **characterized in that** the anchor plate (51) is connectible to the second tie rod (43) of the clamping unit (40) by means of a clamping nut (53).

10. Anchoring system (10) according to one of the claims 1 to 7, **characterized in that** the second anchoring means (50) comprises a sleeve (57), that is able to be screwed completely into a second borehole (58), made in the structural element (12), with an external thread (54) formed over the entire length.

11. Anchoring system (10) according to one of the preceding claims, **characterized in that** the tensioning device (60) is designed as a turnbuckle.

## Revendications

1. Système d'ancrage (10) pour ancrer un élément structurel (12) conçu comme un plafond intermédiaire à une structure (14) dans la construction d'un tunnel, comprenant
▪ un premier moyen d'ancrage (20), qui comprend un élément de retenue (16) conçu comme un manchon (17) pouvant être vissé dans un trou de forage (18) dans la structure (14), l'élément de retenue étant pourvu d'un filetage externe (24),
▪ un deuxième moyen d'ancrage (50) pouvant être disposé sur l'élément structurel (12), et
▪ une unité de serrage (40),
**caractérisé en ce que**
l'unité de serrage (40) comprend une première tige de liaison (42) qui peut être insérée avec une première section d'extrémité (44) dans le manchon (17) qui peut être vissé dans le trou de forage (18) et qui est maintenue dans une région d'extrémité (21) du manchon (17) du côté vissage, et une deuxième tige de liaison (43) pouvant être insérée dans le deuxième moyen d'ancrage (50) et un dispositif de tension (60) pour relier entre elles la première tige de liaison (42) et la deuxième tige de liaison (43).

2. Système d'ancrage (10) selon la revendication 1, **caractérisé en ce que** le filetage externe (24) de l'élément de retenue (16) conçu comme un manchon (17) s'étend sur toute la longueur du manchon (17), et **en ce que** l'élément de retenue (16) peut être vissé complètement dans le premier trou de forage (18).

3. Système d'ancrage (10) selon la revendication 1 ou 2, **caractérisé en ce que** le filetage externe (24) du manchon (17) est un filetage autotaraudeur.

4. Système d'ancrage (10) selon l'une des revendications précédentes, **caractérisé en ce qu'**un filetage interne (26) est formé à l'intérieur de la zone d'extrémité vissable (21) du manchon (17), dans lequel le premier tirant (42) avec un filetage compatible (48) formé sur la première section d'extrémité (44) et/ou une aide à l'installation (30) peut être vissé.

5. Système d'ancrage (10) selon l'une des revendications 1 à 3, **caractérisé en ce qu'**une zone d'extrémité côté entrée (22) du manchon (17) opposée à la zone d'extrémité à visser (21) est conçue avec un logement (28) pour un dispositif d'aide au montage (30) destiné à visser le manchon (17) dans le trou foré (18).

6. Système d'ancrage (10) selon la revendication 5, **caractérisé en ce que** le logement (28) au niveau de la zone d'entrée (22) du manchon (17) présente un diamètre intérieur plus grand qu'au niveau de la zone d'entrée (21) du manchon (17).

7. Système d'ancrage (10) selon l'une des revendications 4 à 6, **caractérisé en ce qu'**il comprend un élément de séparation (36) qui est disposé entre l'aide à l'installation (30) logée dans le manchon (17) et une zone d'extrémité adjacente du manchon (17).

8. Système d'ancrage (10) selon l'une des revendications précédentes, **caractérisé en ce que** le deuxième moyen d'ancrage (50) comprend une plaque d'ancrage (51) qui est reliée à la deuxième tige de liaison (43) pour supporter l'élément structurel (12).

9. Système d'ancrage (10) selon la revendication 8, **caractérisé en ce que** la plaque d'ancrage (51) peut être reliée à la deuxième tige de liaison (43) de l'unité de serrage (40) au moyen d'un écrou de serrage (53).

10. Système d'ancrage (10) selon l'une des revendications 1 à 7, **caractérisé en ce que** le deuxième moyen d'ancrage (50) comprend un manchon (57) qui peut être vissé complètement dans un deuxième trou de forage (58) pratiqué dans l'élément structurel (12), avec un filetage externe (54) formé sur toute la longueur.

11. Système d'ancrage (10) selon l'une des revendications précédentes, **caractérisé en ce que** le dispositif de tension (60) est conçu comme un tendeur.
